# EUROPEAN PATENT SPECIFICATION

(11) **EP 2 994 368 B1**
(45) Date of publication and mention of the grant of the patent: **15.11.2017**
(21) Application number: 13725181.5
(22) Date of filing: 06.05.2013
(51) Int. Cl.: B62D 25/20, B62D 27/02, B62D 29/02

(54) **A FLOORING FOR A FREIGHT TRANSPORTATION VEHICLE OR TRAILER AND A METHOD FOR PROVIDING A FLOORING TO A FREIGHT TRANSPORTATION VEHICLE OR TRAILER**
BODENBELAG FÜR EIN FRACHTTRANSPORTFAHRZEUG ODER EINEN ANHÄNGER UND VERFAHREN ZUR FORMUNG EINES BODENBELAGS FÜR EIN FRACHTTRANSPORTFAHRZEUG ODER EINEN ANHÄNGER
PLANCHER POUR UN VÉHICULE OU UNE REMORQUE DE TRANSPORT DE FRET ET PROCÉDÉ POUR ÉQUIPER D'UN PLANCHER UN VÉHICULE OU UNE REMORQUE DE TRANSPORT DE FRET

(43) Date of publication of application: 16.03.2016
(73) Proprietor: UPM Plywood Oy, 15140 Lahti (FI)
(72) Inventor: MARTTILA, Pasi, FI-15540 Villähde (FI); KOPONEN, Simo, FI-15880 Hollola (FI); YIKIN, Turan, Kocaeli (TR)
(74) Representative: Berggren Oy, Tampere
(86) International application number: PCT/FI2013/050494
(87) International publication number: WO 2014/181027

(56) References cited:
- EP-A2- 1 193 165
- WO-A1-2011/157897
- CA-A1- 2 303 689
- DE-A1- 10 351 701
- GB-A- 2 011 326
- US-A1- 2005 266 200
- US-A1- 2006 101 754

## Description

### Field of the Application

The invention relates to a flooring for a freight transport vehicle or trailer, and a freight transport vehicle or trailer comprising a flooring. The invention also relates to a method for providing a flooring for a freight transport vehicle or trailer.

### Background

Floorings for freight transport vehicles or trailers are made of various plate elements of wood-based material. The wood-based plate elements are fixed at their edges, next to each other and/or one after the other, to the frame beams of the frame of the freight transport vehicle or trailer. The wood-based plate elements may be made for example of a plywood board, or a solid wood board coated with a suitable coating, or a wood-based composite boards with a plastic coating.

WO2011157897 discloses a flooring for a freight transport vehicle or trailer. The flooring made of plywood board is at least partly fixed to a frame of the freight transport vehicle or trailer by means of adhesive.

GB2011326 discloses vehicle floor mounted to a vehicle chassis via an intermediate member of resilient material. The intermediate member between the vehicle floor and the vehicle chassis minimizes sound emission from vehicle floor.

### Summary

Aim of the present application is to provide a durable flooring for a freight transport vehicle or trailer.

According to embodiments a flooring for a freight transport vehicle or trailer, wherein the freight transport vehicle or trailer comprises a frame, and the flooring comprises one or more plates of plywood. The flooring is fixed to the frame of the freight transport vehicle or trailer. The one or more plates of the flooring are fastened to the frame with an adhesive and with an undetachable fastener.

A freight transport vehicle or trailer may comprise a flooring according to embodiments.

An embodiment provides a method for providing a flooring for a freight transport vehicle or trailer, wherein the freight transport vehicle or trailer comprises a frame and wherein the flooring comprises one or more plates of plywood. The method comprises fixing the flooring to the frame of the freight t transport vehicle or trailer, and fastening the one or more plates of the flooring to the frame with an adhesive and with an undetachable fastener.

### Description of the Drawings

The embodiments are described in more detail by referring the appended drawings, in which
- Fig. 1: illustrates a frame of a freight transport vehicle or trailer according to an embodiment.
- Fig.2: illustrates flooring of a freight transport vehicle or trailer according to an embodiment.
- Fig. 3: illustrates a side view of a flooring and a frame according to an embodiment.
- Fig. 4: illustrates a side view of a flooring and a frame according to an embodiment.
- Fig. 5: illustrates a side view of a flooring and a frame according to an embodiment.

The drawings are not in scale.

### Detailed Description of the Embodiments

In this application, a freight transport vehicle refers to a vehicle intended for the transportation of various bulk freight of solid material, for example a truck, a semi-trailer with a bolster-type truck, a full trailer hauled by a truck, a delivery van or pickup, or another similar vehicle or articulated vehicle which is known as such and moving on rubber-tired wheels, the vehicle and/or the trailer comprising a particular load space or body that is intended solely for the transportation of various freight or bulk freight of said kind. The term freight transport vehicle or trailer also covers such trains and cars moving on rails that are only intended for the transportations of freight and above-mentioned bulk freight. Furthermore, the term freight transport vehicle or trailer also covers, for example, various trailers to be hauled by a car, a van, a tractor, or a dune buggy. However, cars, tractors or dune buggies as such cannot be regarded as freight transport vehicles intended in this application.

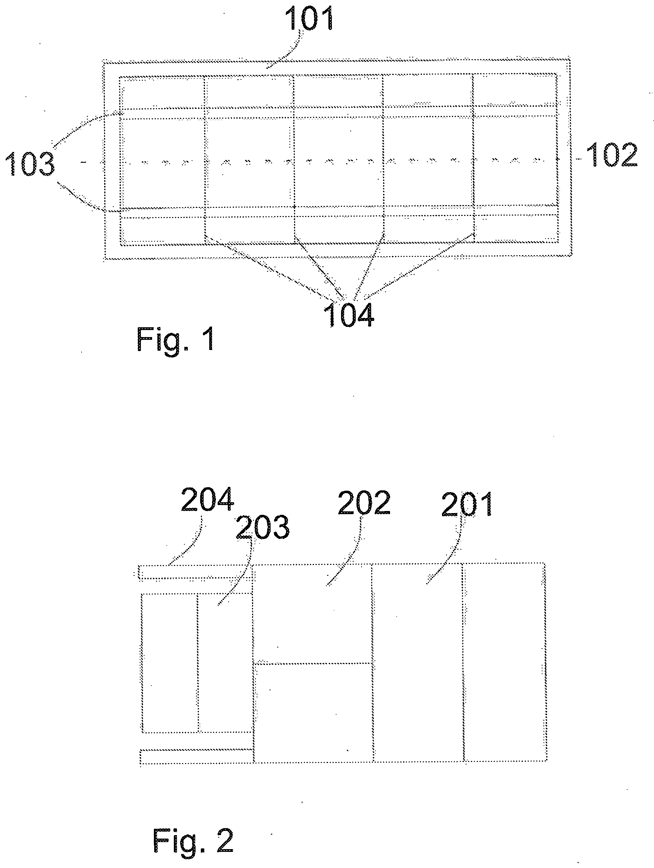

Figure 1 illustrates a frame of a freight transport vehicle or trailer according to an embodiment. The frame comprises an edge profile 101, wherein vertical side walls of the trailer can be attached. The frame comprises pair of longitudinal beams 103 and plurality of transversal beams 104. The transversal beams 104 may be called intermediate beams. The transversal beams 104 are attached perpendicularly to the longitudinal beams 103. The transversal beams 104 are within a certain distance from each other. The longitudinal beams 103 are situated on both sides of the longitudinal central line 102 of the trailer. The longitudinal beams 103 are situated approximately halfway between the central line 102 and the side edge profiles 101 parallel to the central line 102. The longitudinal beams 103 may comprise thickness of 8.0-20.0 mm, for example 8.0-12.0 mm. The transversal beams 104 may comprise thickness of 2.0-6.0 mm, preferably 3.5-5.0 mm, for example 4.5 mm. The edge profile 101 of the frame may comprise thickness of 2.0-5.0 mm, preferably 3.0-4.0 mm.

Profile of the transversal beams may 104 vary. Also placement of the transversal beams 104 in relation to the edge profile 101 may vary in different frame structures, of which Fig. 1 shows an example embodiment. For example, a transversal beam 104 may comprise I-profile, or U-profite with additional arms extending horizontally from the ends of the vertical branches of the U-profiles. According to another example, a transversal beam comprises a Z- profile. In yet another example, the profile of the transversal beam is formed of two Z-profiles being placed next to each other so that the upper vertical arms of the Z-profiles are connected together by means of an suitable connecting element. Any kind of transversal beams may be fixed to longitudinal frame beams 103 by welding them to the side surfaces of the vertical web plates of the longitudinal frame beams 103. The type of transversal beam used in certain location depends on the other constructional elements of the frame around that location. In at least some embodiments, the transversal beams 103 form a part of a flat surface for facing a flooring comprising floor plates. The frame may comprise metal. The metal frame may comprise a coating. According to an embodiment a frame or a metal frame comprises paint on its external surface.

Figure 2 illustrates a flooring of a freight transport vehicle or trailer according to an embodiment. The freight transporting trailer frame may be like the one described with Figure 1. Flooring of Figure 2 comprises plurality of rectangular floor plates 201, 202, 203, 204. The floor plates 201 are oriented transversally in relation to the frame profile. The floor plates 201 are elongated longitudinally between the longitudinal frame beams 103 of the frame. The floor plates 201 are attached next to each other so that longitudinal edge of the rectangular floor plates is facing a longitudinal edge of an adjacent floor plate. The longitudinal (longer) edge of the endmost rectangular floor plates 201 is facing the transversal (shorter) profile of the rectangular frame 101. The transversal (shorter) edges of the rectangular floor plates 201 are facing the longitudinal (longer) edge profile of the rectangular frame 101.

The floor plates 202 of Figure 2 are oriented transversally in relation to the frame profile. The floor plates 202 are attached one after another between the longitudinal beams 103 and transversal beams 104 of the frame of Figure 1. The floor plates 202 have rectangular form. Longitudinal edges of the rectangular floor plates 202 are against the longitudinal frame beams 103 and the longitudinal edge profile 101 of the frame. The transversal edge of the rectangular floor plates 202 is facing transversal edge of an adjacent floor plate. In other embodiments, the transversal edge of the rectangular floor plate 202 may face transversal edge profile 101 of the frame, the longitudinal end portion(s) of the frame.

Figure 2 comprises floor plates 204 between the longitudinal edges of the edge profile 101 of the frame and longitudinal frame beams 103. Floor plates 203 are arranged between the longitudinal frame beams 103. The floor plates 203 are wider than the floor plates 204. The formed floor surface may comprise surface of the flooring plates, and surface of the edge frame profile 101 of the frame and/or surface of the longitudinal frame beam(s) 103. In an embodiment, the transversal frame beam(s) 104 may form part of the floor surface with the floor plates.

The floor plates 201, 202, 203, 204 have been bonded to the transversal beams 104 of the frame (Figure 1). The floor plates 201, 202 have been additionally bonded to longitudinal frame beams 103 of the frame (Figure 1). An embodiment may comprise different kind of floor elements, as plates 201-204 shown in Figure 2. In another embodiment only one kind of flooring elements are used. Embodiments may comprise any mixture of various floor elements or floor plates. For usability upper surface of flooring elements shall be at the same level. In other words, flooring elements shall form a flat surface with a frame profile. According to an embodiment a substantially flat flooring of a freight transport vehicle or trailer comprises at least part of an edge frame profile 101. In an embodiment, transversal and/or longitudinal beams may form part of a flooring of a freight transport vehicle or trailer with floor plates or -elements. In a side view of a flooring attached to a frame an upper surface is used as a floor of the freight transport vehicle or trailer. Transported items or cargo shall be loaded on the upper surface of the formed floor. Advantageously upper surface of the floor has as little as possible, if any, differences in its height, level differences and/or unevenness. Here unevenness refers to arbitrary or random, often visible deviation from a flat surface. The surface may comprise for example microscopic deviations, regular, repetitive or desired grains. Advantageously the edge profile 101 of the frame is at the same level with the flooring.

According to an embodiment a floor plate may comprise plywood board, chipboard, wood fibre board, composite or solid wood board with a coating. A floor plate comprises a planar structure, where two opposing surfaces are at a distance from each other. The surfaces often form a rectangular, or other right-angler oblong structure. The distance between the two opposing surfaces of a floor plate may be 3-50 mm, for example, whereas area of the surface is many times larger, for example 0.5-5 m². A floor plate according to at least some/all example embodiments comprise plywood, which comprises veneers attached to each other. Veneers may comprise thickness of 1-5 mm, preferably 1.1-4.0 mm. The veneers may be manufactured using slicing, die cutting or rotary cutting, for example. Veneers may be attached to each other using phenolic resin. In at least some embodiments a liquid resin is utilized in order to attach veneers of the plywood. Plywood comprising rotary cut veneers provides strong and stable plywood for a strength floor plate. An unbending floor plate enables handy attachment of a floor plate, whereas a bent floor plate requires more work and/or manufacturing phases in order to form substantially flat floor surface. Plywood comprising veneers provides a rigid structure. This enables use of separate floor plates and accordingly simpler processing, treatment, handling and/or installation of plates of convenient size. A continuous, one-piece floor plate is not required. Strength properties of the plywood may be predetermined and adjusted at the desired direction(s). In an embodiment at least one surface of the plywood is coated. Any coating suitable for a plywood is applicable. A coating may be attached using hot-pressing.

In an embodiment at least one surface of the plywood is coated with phenolic resin layer. The plywood comprises a phenolic resin coating at least on a surface facing the frame. The opposing surface of the plywood may be structured, or coated with another suitable coating. Preferably the plywood comprises a phenolic resin coating on its both surfaces. The phenolic resin may comprise film impregnated phenolic resin. In an embodiment the film comprises paper. In an alternative embodiment, the film is paper. Plywood coating has effect of providing good adhesion between the adhesive, for example polyurethane, and phenolic coating of the plywood. A phenolic resin surface has an effect of providing a good attachment via the adhesive layer. A phenolic resin coating may have effect of shielding wood-based portions and/or providing a coating resistant to moisture.

According to embodiments the plywood plates arranged next to each other in order to form a flooring are attached to each other on their edges with film impregnated resin or adhesive, or adhesive in liquid form. Preferably seams between the plywood plates of flooring are attached with adhesive in liquid form. According to embodiments plywood coating comprises liquid coating or film impregnated coating. Preferably the plywood coating comprises film impregnated coating.

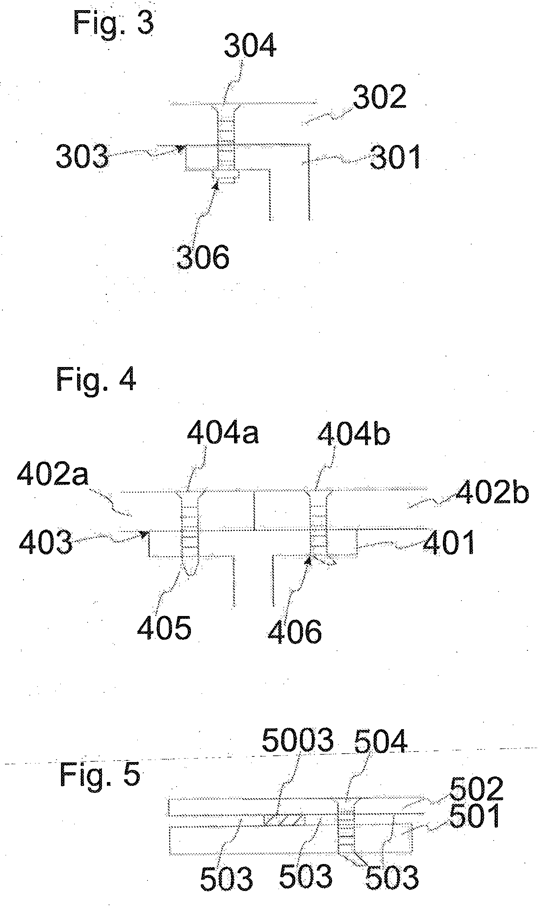

Figure 3 illustrates a side view of a flooring and a frame according to an embodiment. The floor plate 302 is arranged on the frame 301, for example on an upper face side of a transversal beam. The floor plate 302 is attached to the frame 301 with an adhesive 303. An adhesive 303 is applied onto the frame part 301, for example on the upper surface of a transversal beam, in order to attach the floor plate 302 onto the transversal beam. Adhesive 303 is applied to at least frame parts, onto which any edge parts of a floor plate are to be attached. The floor plate 302 is placed on adhesive 303, which is placed on the frame 301. In an embodiment there are no layers in addition to the adhesive joint layer between the attachable and/or attached floor plate and the frame.

According to embodiments the floor plate 302 is attached to the frame 301 with an adhesive 303 and an undetachable fastener 304. For example, a rectangular floor plate may comprise undetachable fasteners 304 placed close to at least two corners of the rectangular floor plate, and optionally along longitudinal sides of the rectangular floor plate. A fastener 304 of Figure 3 is a bolt. The bolt 304 may comprise threads. There may be a hole drilled through the floor plate 302 and the frame 301 for the bolt 304, or the bolt may be self-drilling. An undetachable fastener causes threads to the attached floor plate and frame, for example via drilling the undetachable fastener. The bolt 304 is placed, for example screwed, through the hole or through the attachable floor plate and frame. Preferably the bolt 304 is installed from the surface of the floor plate 302 so that it passes through the floor plate 302 and the frame 301. Base of the bolt 304 is approximately on the level of the surface of the surface of the floor plate 302, which surface is opposing the surface of the floor plate facing the frame 301. The bolt 304 has a counterpart 306 which is fastened to a side of the frame 301, which is opposing the frame side facing the floor plate 302. The counterpart 306 of the bolt 304 is undetachably fixed to the bolt 304. This may be implemented for example by welding. Undetachably fixed means that the counterpart 306 cannot be separated from the bolt 304 without breaking the fastener 304 or the counterpart 306 of it. Distance between the bolt 304 and the counterpart 306, once undetachably fastened, does not change, but remains the same. Once an undetachable fastener is fastened, it cannot be opened. The undetachable fastener is unfastenable and/or irrevocably fastened. The fastener may form a seal and/or a lock, which cannot be unsealed and/or unlocked without visible marks.

According to embodiments, the undetachable fastener is arranged to be visible on a surface of the floor plate 302, which surface is opposing a surface of the plate facing the frame 301, and on a surface of the frame 301, which surface is opposing a surface of the frame facing the floor plate 302. According to at least some/all embodiments each floor plate of the flooring comprises at least two undetachable fasteners. The at least two undetachable fasteners may be fastened on at least two, three or four edges of the floor plate. Two undetachable fasteners may be fastened on opposing edges of a floor plate. The at least two undetachable fasteners may be fastened on at least two, three or four corners of the floor plate, or at proximity of corners of the floor plate. According to embodiments, multiple undetachable fasteners are fastened to a floor plate. Distance between the two undetachable fasteners may be as long as possible along the circumference of a floor plate. The two undetachable fasteners may oppose each other on the circumference of the floor plate.

An fastener may comprise a bolt, a screw, a rivet, a nut or any suitable means for fixing according to embodiments a floor plate to a frame. Different kind of fixing, fastening, bushing or riveting means may be suitable. The fastener is secured or made undetachable for example by riveting, sealing, welding or bending the fastener. Undetachable fastener cannot be removed without damaging it, or parts around it.

In an embodiments, while the undetachable fastener passes though adhesive layer between the floor plate and the frame, the undetachable fastener passes some adhesive between the undetachable fastener and the frame. Undetachable fastener may comprise threads. The undetachable fastener may pass adhesive from between the flooring and the frame, for example on its threads, to between the undetachable fastener and the frame. Additionally or alternatively the fastener may comprise adhesive. Fastener may comprise adhesive at least on a part of it placed next to the frame, when fixed. Adhesive between the undetachable fastener and the frame may have effect of locking and/or sealing the unetachable fastener.

Attachment of the flooring to the frame with an adhesive and with an undetachable fastener may have effect of providing a secure flooring for a freight transport vehicle or trailer. The freight transport vehicle or trailer space, which is used for a particular load space, or body that is intended solely for the transportation of various freight or bulk freight of the kind, cannot be accessed via the flooring according to embodiments.

Adhesive according to embodiments may be any known adhesive capable of forming a stable and sustainable adhesion between a floor plate and a frame. The adhesive may comprise one-component polyurethane adhesive. Polyurethane adhesive has an effect of providing good attachment between a metal frame and a plywood, as well as between a metal frame and a phenolic resin coating layer of a plywood. The metal frame may be painted. The attachable surfaces, being surfaces of the frame, for example transversal beams, and edge areas of the lower surfaces of the floor plates, may be treated with primer prior the application of the adhesive for increasing the adhesive force between these surfaces and the adhesive.

An adhesive is arranged onto an edge part of one surface of the floor plate comprising two surfaces. An adhesive is provided along circumference of the floor plate according to an embodiment. In at least some embodiments, an adhesive is further provided onto at least some middle portion of the floor plate surface. The adhesive is provided on areas of a floor plate surface, wherein the floor plate surface is facing the frame.

Figure 4 illustrates a side view of a flooring and a frame according to an embodiment. Flooring comprises floor plates 402a, 402b, which are fixed to the frame 401. The floor plates 402a, 402b are arranged in a butt connection with each other. The floor plates 402a, 402b comprise same thickness, being a dimension upwards from the frame 401. The floor plates 402a, 402b form at least part of the flooring, where advantageously the upper surface of the flooring comprises floor plates and possible frame parts at an approximately same level.

The floor plate 402a is fixed to the frame 401 with adhesive 403. Also butt joint between the floor plates 402a, 402b may comprise adhesive. The adhesive may be in liquid form. A fastener 404a is installed from the floor plate 402a side, passing through the floor plate 402a and the frame 403, and thus fastening the two. Base of the fastener 402a is at least approximately on the same level with the surface of the floor plate 402a, i.e. the flooring. The fasteners 402a, 402b of Figure 4 are screws comprising threads. The screws may be self-drilling, so no hole drilling is needed before installing them. Alternatively a predrilled hole may be made for the fasteners 402a, 402b. An undetachable fastener advantageously provides threads to the floor plate and to the frame, when installed, for example screwed or drilled. The threads carry adhesive 403 between the floor plates 402a, 402b, when the screws 404a, 404b are being installed. When screws 404a, 404b are in place, there is advantageously adhesive also between the screws 404a, 404b and the frame 401. The screw 404a may be locked and/or sealed by the adhesive between the screw 404a and the frame 401. The screw is not yet secured or made undetachable. In order to form an undetachable fixing, the screw 404a may be for example welded or bent on the frame surface side 405.

The floor plate 402b is fastened to the frame 401 with an adhesive 403 and undetachable fastener 404b. The floor plate 402b is fastened in a similar manner as the floor plate 401b. The screw 404b is bent on its end 406, extending beyond a frame 401 surface, which surface is opposing the frame surface facing the floor plate 402b. Bending of the screw 402b is irrevocable, thus it cannot be unbent without breaking the screw 402b. If the screw 402b is to be unfastened or detached, it needs to be broken.

Undetachable fasteners according to embodiments are arranged to be visible on a surface of the floor plate, which surface is opposing a surface of the plate facing the frame, and on a surface of the frame, which surface is opposing a surface of the frame facing the floor plate. This may have effect of enabling ensuring that the flooring is permanently fixed to the frame. Advantageously load space may not be accessed via flooring without leaving visible marks.

Figure 5 illustrates a side view of a flooring and a frame 501 according to an embodiment. An undetachable fastener 504 has been bent, for example as illustrated with the embodiment of figure 4. A floor plate 502 of Figure 5 is attached to the frame 501 with an adhesive joint. The adhesive joint comprises an adhesive 503 and elastic spacer(s) 5003, which are placed between the floor plate 502 and the frame 501. The floor plate 502 is then put on place so that its edge and/or corner parts are facing elastic spacers 5003 of the adhesive joint. The floor plate 502 may be pressed towards the adhesive joint and frame 501. The pressure may be supplied during the adhesive bonding. The pressure may be implemented by installing undetachable fastener(s) 504, which press the floor plate 502 towards the adhesive joint and the frame 501. Elastic spacer(s) 5003 maintain certain distance between the floor plate and the frame, even if pressure is applied. The elastic spacer(s) 5003 enable providing an adhesive joint of certain thickness, wherein thickness of the adhesive joint corresponds to the thickness of the elastic spacers 5003. Elastic spacers may comprise average thickness of 1-5 mm, preferably 2-4, or for example 3 mm. In response to the pressure, at least some of the elastic spacers 5003 may flex slightly. Thickness of at least some elastic spacers 5003 may change so that distance between the frame 501 and the floor plate 502 changes accordingly, at least locally. The elastic spacers 5003 comprise relatively hard material. An elastic spacer may comprise a hardness of 30-95, or preferably 50-85; or more preferably 60-80 measured according to standard ASTM D2240 type A or Shore-A. The amount of change of thickness due to elasticity may be only from less than one to few per cent of the thickness of the elastic spacer 5003. According to an embodiment the adhesive joint comprises a thickness corresponding to a thickness of the elastic spacers. The applied adhesive 503 is spread evenly on the frame 501 due to the pressure. Even adhesive layer forms a steady and stable attachment of the floor plates 502 to the frame 501. The attachment is resistant and persists hard use. According to an embodiment elastic spacers 5003 are placed on a frame before applying an adhesive. Alternatively elastic spacers may be placed on the adhesive on the frame.

The applied adhesive may be spread on the frame next to sides of an elastic spacer. The elastic spacer comprises small dimension compared to the corresponding dimension of the applied adhesive wake. For example, a frame may comprise width of 10 cm, an elastic spacer may comprise width of 0.5-3.5 cm, and adhesive wake may comprise width of 0.5-3.5 cm. Generally, the adhesive wake is left on the frame and remains narrow compared to the frame area (upper surface) even after the floor plate has been attached to the frame with the adhesive. If broader adhesive wake is desired, for example for a wider area frame, more adhesive may be provided and then expanded on a frame when attaching a floor plate. The floor plate may be put on adhesive and its own weight may expand the adhesive so that thickness of the adhesive layer between the frame and the floor plate corresponds to the thickness of elastic spacers between the frame and the floor plate.

An adhesive joint between a floor plate and a chassis frame according to embodiments may enable using different floor plates. Floor plates need not be of uniform quality. For example, floor plates may comprise warps, or form a structure of U- or J-form, where the floor plate may comprise bent structure so that two opposing end edge portions are at a different level(s) than the mid portion of the floor plate. Alternatively, a floor plate may form a cup like structure, where edge and/or corner portions are on different level(s) than the middle portion of the floor plate. A floor plate may have different kind of bent structure, where the surface of the floor plate is not smooth or at the same level, but some evenness occurs. According to an embodiment floor plates of different quality may be utilized. Although a polyurethane does not require pressing in order to attach, in at least some embodiments the floor plate is pressed towards the adhesive joint. This may be implemented with an undetachable fastener, other kind of fastener(s), and/or temporary external pressure means. The adhesive joint comprises certain thickness despite the external press and/or original form or quality of the floor plate due to the adhesive and the elastic spacers. According to embodiments the adhesive joint has certain thickness. Thus it is possible to press the floor plates towards the flexible adhesive joint in order to achieve continuous and durable adhesion along the adhesive joint. Even with floor plates of non-uniform quality a desired even and/or flat flooring may be provided. Constant amount of adhesive along the adhesive joint enables durable adhesion even for uneven floor plates. For example, if amount of adhesive is modest, pressing a bent floor plate may also result in pressing most of the adhesive away from the adhesive joint. In this case adhesive joint may include areas with too modest amount, if any, adhesive, leaving at least parts of the floor plate unattached. Whereas with the embodiments, the elastic spacers have effect of ensuring the thickness of adhesive joint. Elastic spacers have certain flexibility, but those still maintain some thickness. The spacers give stability to the thickness of the adhesive joint. The floor plate is not in touch with the chassis frame. The adhesive joint thus always comprises certain amount of adhesive at least between two elastic spacers for durable adhesion. Thus an even, continuous and durable adhesion is achieved with the adhesive joint according to embodiments.

Each floor plate of the flooring may comprises at least two undetachable fasteners. The at least two undetachable fasteners may be on at least two edges of the plate, or on at least two corners of the plate. The two edges and/or corners may be opposing each other. Number of undetachable fasteners per plate may depend on plate size and other requirements of the flooring. The undetachable fasteners may provide effect of securing the load space of the freight transport vehicle or trailer. Two undetachable fasteners may be fastened on opposing corners of a floor plate. In a floor plate perimeter the two undetachable fasteners are preferably as far from each other as possible. In an example, distance between the two undetachable fasteners is perimeter of the floor plate divided by two, wherein the distance may comprise a deviation of less than 30 %, preferably less than 20 %, more preferably less than 10 %. Placement of an undetachable fastener may have effect on providing straight and/or even flooring. Any curvature of a floor plate may be rectified with the undetachable fasteners. A warped or twisted floor plate may be attached on its (2-4) opposing corners. A convex or concave floor plate may be attached on its longer and/or shorter edges. The undetachable fasteners may straighten floor plates during adhesion process and ensure that the adhesion surfaces of the floor plates are in touch with the adhesive.

The undetachable fastener is arranged to be fixed irrevocably to the fastenable plate and frame. If fastener or a flooring plate need to be changed, the undetachable fastener will be replaced by a new undetachable fastener. The undetachable fasteners are disposable and may be used one time only. Undetachable fasteners according to embodiments maintain their positions such that the undetachable fasteners are unable to start unfastening. Some other fasteners may unscrew or start screwing off for example due to stress or strain caused by the fastened parts or a load. The unscrewed bases of the fasteners extending to the load space may harm the load or any transportable items, or packages of those. The undetachable fasteners according to embodiments have effect of forming a safe load space for the transportable items. In case of any weakening or breakage of the undetachable fastening means according to embodiments, the adhesive between the fastener and the frame may secure the fastening and advantageously placement of the fastener. Possibly injured or non-working fastener may be replaced before it starts harming the transported load. During replacing an undetachable fastener, the floor plate is kept in place with adhesive.

The adhesive is arranged between the one or more floor plates and the frame, and at least partly between the undetachable fastener and the frame. The adhesive between the undetachable fastener and the frame may be arranged to lock and/or seal the undetachable fastener. No separate locking means or sealing means are required.

Corrosion may affect flooring and/or frame parts of a freight transport vehicle or trailer. The structure may be expose to rain, wet road or moist external conditions. Water or moisture may leak through flooring at fastener fixing locations. Water or moisture may enter to frame beams and space between a frame beam and a fastener. This may cause corrosion at frame beams and/or fasteners. Corrosion may further affect the flooring and frame structure. For example formic acid emitted by birch veneers may pose a corrosion load to frame and fasteners. In order to avoid defects caused by corrosion floor plates, fasteners and frame may be coated in order to sustain external conditions. Metal parts may be zink coated or made of rustproof or stainless metal. Further, according to embodiments, the adhesive between the fastener and the frame may form an insulation. The adhesive between the fastener and the frame may have an effect of preventing moisture or water leaking to frame or other parts via fastener fixing locations. Even when zinked fasteners are used, the bending point of the fastener, e.g. 406 in Figure 4, may cause the zink coating to be weakened or split. The adhesive between the fastener and the frame acts as an insulator and prevents corrosion from entering to the frame.

In an example according to embodiments a thin metal frame is used. Thickness of the metal frame may be for example 2-12 mm. In prior case, where the adhesive is not used between the frame and the floor plate, bending of the screw might harm the metal frame. According to embodiments adhesive between the metal frame and the floor plate(s) has effect of holding the frame and the floor plate(s) in place in relation to each other, and making the construction strong. The frame and the floor plate(s) attached with adhesive form an integral element, to which the undetachable fasteners are applied. For example bending a screw does not pose movement or any harm to the fastened frame or floor plate(s). Without the adhesive, i.e. when working with two separate parts (frame and floor plate), the screws may cut during bending, for example. Also during transport, the construction without adhesive has drawbacks and/or may be exposed to stresses due to movement of floor plate(s) in relation to the metal frame.

Before assembling the floor plates according to embodiments, at first, the chassis frame may be cleaned with the help of suitable washing detergent (e.g. with the help of solvent based cleaning detergent and pressurized water). Preferably at least the upper surfaces of the intermediate beams being the attachment surfaces for the floor plates. Aim is to remove dirt and/or fattiness from these surfaces. If any water has been used, the frame must be dried prior placing and/or bonding of the floor plates. However, any cleaning may not be necessary if the attachment surfaces are already free from dirt after the previous manufacturing stages.

When suitable preprocessing for ensuring appropriate cleanliness has been performed, the upper surfaces of the frame beams and those edge parts of the lower surfaces of the floor plates becoming against the upper surfaces of the frame beams may be treated with a primer. This is done for ensuring the appropriate adhesion of the adhesive used for attachment of the floor plates. For example parts made of aluminum are pretreated before attaching floor plates onto the parts. After drainage of the primer, a suitable amount of adhesive is spread to bonding areas. A frame may be in horizontal or vertical position. While the frame is at horizontal position during the attachment stage, the adhesive may be spread onto the upper surfaces of the frame beams and/or to edge parts of the lower side of the floor plates. This can be carried out manually by using suitable extrusion equipment or automatically e.g. in an production line equipped with robot arms for spreading the adhesive. Elastic spacers, if employed, may be put on the adhesive. After the adhesive has been spread, and optionally elastic spacer put on their positions, the floor plates are placed one after another on to the frame beams such that for those floor plates, which are being between the longitudinal frame beams, the longitudinal edges are against inner edges of flanges of the longitudinal frame beams. For those floor plates being between the edge profiles and the frame beams, the inner longitudinal edges are against outer edges of flanges of the longitudinal frame beams and the outer longitudinal edges are against the inner side of the edge profiles. The transversal edges of the floor plates, except the front edges of the foremost row at front part of the frame and the rear edges of the rearmost row of floor plates at the rear part of the frame, are against each other. In this case the connection planes formed by two adjacent transversal sides of the floor plates are coplanar with the longitudinal center lines of the transversal beams being between the longitudinal frame beams and the side edge profiles. The front edges of the foremost row of the floor plates at front part of the frame are against the inner side of the transversal edge profile and the rear edges of the rearmost row of floor plates at the rear part of a trailer are against the inner side edges of the transversal edge profile, similarly as the longitudinal edges of the outer floor plates are against the inner side edges of the longitudinal side edge profiles.

For ensuring the tightness of the flooring, some adhesive may be provided between the transversal edges of the adjacent floor plates, between the inner longitudinal edges of the floor plates, the outer side edges of the longitudinal frame beams, between the outer edges of the floor plates (i.e. those forming the side portions of the flooring) and/or the inner sides of the edge profiles.

During the curing of the adhesive, the floor plates may be pressed against the adhesive and attachment surfaces of the frame beams. This may be desired in order to enable surfaces being bonded together appropriately against each other. Further, pressing may enable adhesive to be spread evenly. Pressing can be carried out in various ways. For example undetachable fasteners according to embodiments may be installed at this phase in order to press possibly bent or non-straight floor plates evenly towards the frame. Alternatively or additionally, suitable loading objects may be placed onto the floor plates. There might be provided one loading object for each floor plate, or there might be some, or only one load that is laid on to the whole flooring. If common loading object for two or more floor plates is used there might be provided some elastic material between the loading object and the floor plates for ensuring that the load of the loading object distributes as evenly as possible to all floor plates, which are being pressed. Alternatively, pressing might be carried out mechanically by pressing the floor plates against the attachment surfaces of the frame beams with the help of hand-screw presses, adjustable clamps or hydraulically or pneumatically actuated pressing device or devices. Also when this kind of pressing is used, the even distribution of the load can be ensured by similar or corresponding means as described above.

Since adequate curing of the adhesive has took place the loading objects or in case of mechanical pressing the pressing devices (if used) are removed after which the assembly of the flooring is complete. In some cases, it is desired to include some additional fasteners, for example undetachable fasteners according to embodiments and/or additional rivets, screws or bolts to some places, for example to the edges or corners of the floor plates. Additional fasteners may be desired, when the trailer is used for transporting such goods that may be very demanding in respect of the strength and durability of the flooring. For instance, in case when the trailer is used for transporting very heavy loads or objects being secured to the flooring with such attachment belts that are attached directly to the flooring, additional securing fasteners may be desired. Edge parts of the floor plates next to external rectangular chassis frame may be sealed separately, for example after the floor plates have been attached.

The undetachable fasteners according to embodiments are preferably assembled after the floor plates have been placed on the frame beams prior to pressing and curing stage. The undetachable fasteners according to embodiments may have effect of ensuring the strength and durability of the flooring. The undetachable fasteners according to embodiments enable transportation and/or vertical positions and/or rotation during attachment phases, since a floor plate is kept in place with the undetachable fasteners even before the adhesive has been cured. This may speed up the delivery cycle. The undetachable fasteners may secure the adhesive joint and/or avoid any openings in the adhesive joint. The adhesive applied between the floor plates and the frame has effect of strengthening the frame of the load space and/or providing a rigid freight transport vehicle or trailer. Mechanical stress caused to the parts during driving may be minimized, thus the life cycle of any of the parts may be extended. Still number of undetachable fasteners is relatively small, compared for example to solutions using only mechanical fasteners. Small amount of fasteners has effect on simple, fast and handy manufacturing. For example electric cables may pass via frame structure and the cables are assembled before the floor plates. With lesser number of mechanical fasteners, probability of harming electric cables is reduced correspondingly.

The flooring according to embodiments might be formed also differently as described in the above described embodiments. For instance, the attachment surfaces of floor plates can be, instead of the lower edge surfaces, the side surfaces of floor plates. In that case, the frame beams might be formed from profiles having vertical connection surfaces that can be used as the attachment surfaces of the floor plates. In some applications, it is also possible to use tongue-and-groove joints for connecting adjacent floor plates to each other. Further in some embodiments the sides of the floor plates can be cut out so that their shape conforms the shape of the sides of the beams to which they are bonded. Therefore there could be preferably such shapes in the beams that restrain the floor plates at least in one direction. This direction might be advantageously chosen such that it is the direction being the most critical direction in point of view of the strength of the adhesive i.e. it prevents more preferably tensile loads than those causing shearing forces to the adhesive attachments between the floor plates and the frame.

Many other constructional parts and details of the flooring according to the embodiments, as well as the method for providing such flooring can be carried out in ways differing from the previously described embodiments or examples, but being within the scope of the invention defined hereafter in the claims.

## Claims

1. A flooring for a freight transport vehicle or trailer, wherein the freight transport vehicle or trailer comprises a frame (101, 102, 103, 104) and the flooring (201, 202, 203, 204) comprises one or more plates of plywood, and wherein the flooring is fixed to the frame of the freight transport vehicle or trailer, **characterized in that** the one or more plates (302, 402a, 402b, 502) of the flooring are fastened to the frame (301, 401, 501) with an adhesive (303, 403, 503) and with an undetachable fastener (304, 404a, 404b, 504), wherein the undetachable fastener (304, 404a, 404b, 504) is arranged to pass through the fastened plate (302, 402a, 402b, 502) and frame (301, 401, 501).

2. A flooring for a freight transport vehicle or trailer according to claim 1, wherein the undetachable fastener (304, 404a, 404b, 504) comprises a mechanical fastener.

3. A flooring for a freight transport vehicle or trailer according to any of claims 1-2, wherein the undetachable fastener (304, 404a, 404b, 504) is arranged to be visible on a surface of the plate (302, 402a, 402b, 502), which surface is opposing a surface of the plate facing the frame (301, 401, 501), and on a surface of the frame (301, 401, 501), which surface is opposing a surface of the frame facing the plate (302, 402a, 402b, 502).

4. A flooring for a freight transport vehicle or trailer according to any of claims 1-3, wherein the undetachable fastener (304, 404a, 404b, 504) comprises bent, welded or riveted part.

5. A flooring for a freight transport vehicle or trailer according to any of claims 1-4, wherein the one or more plates (302, 402a, 402b, 502) of the flooring are fastened to the frame (301, 401, 501) with an adhesive (303, 403, 503) and with at least two undetachable fasteners (304, 404a, 404b, 504).

6. A flooring for a freight transport vehicle or trailer according to any of claims 1-5, wherein each plate (302, 402a, 402b, 502) of the flooring comprises at least two undetachable fasteners fasteners (304, 404a, 404b, 504).

7. A flooring for a freight transport vehicle or trailer according to any of claims 1-6, wherein each plate (302, 402a, 402b, 502) of the flooring comprises an undetachable fastener (304, 404a, 404b, 504) on at least two opposing edges of the plate (302, 402a, 402b, 502), and/or on at least two opposing corners of the plate (302, 402a, 402b, 502).

8. A flooring for a freight transport vehicle or trailer according to any of claims 1-7, wherein the adhesive (303, 403, 503) is arranged on the frame surface and the one or more plates (302, 402a, 402b, 502) are arranged on the adhesive (303, 403, 503).

9. A flooring for a freight transport vehicle or trailer according to any of claims 1-8, wherein an adhesive joint between the one or more plates and the frame consist of adhesive (503) and elastic spacers (5003).

10. A flooring for a freight transport vehicle or trailer according to any of claims 1-9, wherein the adhesive (303, 403, 503) is arranged between the one or more plates (302, 402a, 402b, 502) and the frame (301, 401, 501), and at least partly between the undetachable fastener (304, 404a, 404b, 504) and the frame (301, 401, 501).

11. A flooring for a freight transport vehicle or trailer according to any of claims 1-10, wherein the adhesive (303, 403, 503) is arranged to lock the undetachable fastener (304, 404a, 404b, 504) and/or wherein the adhesive (303, 403, 503) is arranged to seal the undetachable fastener (304, 404a, 404b, 504).

12. A flooring for a freight transport vehicle or trailer according to any of claims 1-11, wherein the adhesive (303, 403, 503) comprises polyurethane based adhesive.

13. A flooring for a freight transport vehicle or trailer according to any of claims 1-12, wherein the adhesive (303, 403, 503) is comprised between edges of the one or more plates (302, 402a, 402b, 502) and a part of the frame (301, 401, 501) facing the edges of the one or more plates (302, 402a, 402b, 502).

14. A flooring for a freight transport vehicle or trailer according to any of claims 1-13, wherein the frame (301, 401, 501) comprises metal, and/or wherein the frame (301, 401, 501) comprises paint on its external surface.

15. A flooring for a freight transport vehicle or trailer according to any of claims 1-14, wherein the plywood comprises a phenolic resin coating at least on a surface facing the frame, or wherein preferably the plywood comprises a phenolic resin coating on its both surfaces.

16. A freight transport vehicle or a trailer comprising a frame (301, 401, 501) and a flooring according to any of claims 1-15.

17. A method for providing a flooring for a freight transport vehicle or trailer, wherein the freight transport vehicle or trailer comprises a frame and the flooring comprises one or more plates of plywood, and wherein the method comprises fixing the flooring to the frame of the freight transport vehicle or trailer, **characterized in that** the method comprises fastening the one or more plates (302, 402a, 402b, 502) of the flooring to the frame with an adhesive (303, 403, 503) and with an undetachable fastener (304, 404a, 404b, 504) such that the undetachable fastener (304, 404a, 404b, 504) is arranged to pass through the fastened plate (302, 402a, 402b, 502) and frame (301, 401, 501).

## Patentansprüche

1. Ein Bodenbelag für ein Frachttransportfahrzeug oder einen Anhänger, wobei das Frachttransportfahrzeug oder der Anhänger einen Rahmen (101, 102, 103, 104) aufweist und der Bodenbelag (201, 202, 203, 204) eine oder mehrere Platten aus Sperrholz aufweist, und wobei der Bodenbelag am Rahmen des Frachttransportfahrzeugs oder des Anhängers befestigt ist, **dadurch gekennzeichnet, dass** die eine oder mehreren Platten (302, 402a, 402b, 502) des Bodenbelags am Rahmen (301, 401, 501) mit einem Haftmittel (303, 403, 503) und mit einem unlösbaren Befestigungselement (304, 404a, 404b, 504) befestigt sind, wobei das unlösbare Befestigungselement (304, 404a, 404b, 504) angeordnet ist, um durch die befestigte Platte (302, 402a, 402b, 502) und den Rahmen (301, 401, 501) zu reichen.

2. Bodenbelag für ein Frachttransportfahrzeug oder einen Anhänger gemäß Anspruch 1, wobei das unlösbare Befestigungselement (304, 404a, 404b, 504) aus einem mechanischen Befestigungselement besteht.

3. Bodenbelag für ein Frachttransportfahrzeug oder einen Anhänger gemäß einem der Ansprüche 1 bis 2, wobei das unlösbare Befestigungselement (304, 404a, 404b, 504) so angebracht ist, dass es auf einer Oberfläche der Platte (302, 402a, 402b, 502) sichtbar ist, wobei die Oberfläche einer Oberfläche der dem Rahmen (301, 401, 501) zugewandten Platte gegenüberliegt, und auf einer Oberfläche eines Rahmens (301, 401, 501), wobei die Oberfläche einer Oberfläche der dem Rahmen zugewandten Platte (302, 402a, 402b, 502) gegenüberliegt.

4. Bodenbelag für ein Frachttransportfahrzeug oder einen Anhänger gemäß einem der Ansprüche 1 bis 3, wobei das unlösbare Befestigungselement (304, 404a, 404b, 504) aus einem gebogenen, geschweißten oder genieteten Teil besteht.

5. Bodenbelag für ein Frachttransportfahrzeug oder einen Anhänger gemäß einem der Ansprüche 1 bis 4, wobei die eine oder mehreren Platten (302, 402a, 402b, 502) des Bodenbelags am Rahmen (301, 401, 501) mit einem Haftmittel (303, 403, 503) und mit mindestens zwei unlösbaren Befestigungselementen (304, 404a, 404b, 504) befestigt ist.

6. Bodenbelag für ein Frachttransportfahrzeug oder einen Anhänger gemäß einem der Ansprüche 1 bis 5, wobei jede Platte (302, 402a, 402b, 502) des Bodenbelags mindestens zwei unlösbare Befestigungselemente (304, 404a, 404b, 504) aufweist.

7. Bodenbelag für ein Frachttransportfahrzeug oder einen Anhänger gemäß einem der Ansprüche 1 bis 6, wobei jede Platte (302, 402a, 402b, 502) des Bodenbelags ein unlösbares Befestigungselement (304, 404a, 404b, 504) an mindestens zwei gegenüberliegenden Kanten der Platte (302, 402a, 402b, 502) und/oder an mindestens zwei gegenüberliegenden Ecken der Platte (302, 402a, 402b, 502) aufweist.

8. Bodenbelag für ein Frachttransportfahrzeug oder einen Anhänger gemäß einem der Ansprüche 1 bis 7, wobei das Haftmittel (303, 403, 503) an der Rahmenoberfläche angebracht ist und die eine oder mehreren Platten (302, 402a, 402b, 502) auf dem Haftmittel (303, 403, 503) angebracht sind.

9. Bodenbelag für ein Frachttransportfahrzeug oder einen Anhänger gemäß einem der Ansprüche 1 bis 8, wobei eine Haftmittelverbindung zwischen der einen oder mehreren Platten und dem Rahmen aus Haftmittel (503) und elastischen Abstandshaltern (5003) besteht.

10. Bodenbelag für ein Frachttransportfahrzeug oder einen Anhänger gemäß einem der Ansprüche 1 bis 9, wobei das Haftmittel (303, 403, 503) zwischen der einen oder mehreren Platten (302, 402a, 402b, 502) und dem Rahmen (301, 401, 501), und mindestens teilweise zwischen dem unlösbaren Befestigungselement (304, 404a, 404b, 504) und dem Rahmen (301, 401, 501) angebracht ist.

11. Bodenbelag für ein Frachttransportfahrzeug oder einen Anhänger gemäß einem der Ansprüche 1 bis 10, wobei das Haftmittel (303, 403, 503) angebracht ist, um das unlösbare Befestigungselement (304, 404a, 404b, 504) zu verschließen und/oder wobei das Haftmittel (303, 403, 503) angebracht ist, um das unlösbare Befestigungselement (304, 404a, 404b, 504) abzudichten.

12. Bodenbelag für ein Frachttransportfahrzeug oder einen Anhänger gemäß einem der Ansprüche 1 bis 11, wobei das Haftmittel (303, 403, 503) aus polyurethanbasierten Haftmittel besteht.

13. Bodenbelag für ein Frachttransportfahrzeug oder einen Anhänger gemäß einem der Ansprüche 1 bis 12, wobei sich das Haftmittel (303, 403, 503) zwischen Kanten der einen oder mehreren Platten (302, 402a, 402b, 502) und einem Teil des Rahmens (301, 401, 501) befindet, der den Kanten der einen oder mehreren Platten (302, 402a, 402b, 502) zugewandt ist.

14. Bodenbelag für ein Frachttransportfahrzeug oder einen Anhänger gemäß einem der Ansprüche 1 bis 13, wobei der Rahmen (301, 401, 501) aus Metall besteht und/oder wobei der Rahmen (301, 401, 501) Farbe auf seiner Außenfläche hat.

15. Bodenbelag für ein Frachttransportfahrzeug oder einen Anhänger gemäß einem der Ansprüche 1 bis 14, wobei das Sperrholz eine Phenolharzbeschichtung zumindest auf einer dem Rahmen zugewandten Oberfläche aufweist, oder wobei vorzugsweise das Sperrholz eine Phenolharzbeschichtung auf seinen beiden Oberflächen aufweist.

16. Ein Frachttransportfahrzeug oder ein Anhänger mit einem Rahmen (301, 401, 501) und einem Bodenbelag gemäß einem der Ansprüche 1 bis 15.

17. Ein Verfahren zum Vorsehen eines Bodenbelags für ein Frachttransportfahrzeug oder einen Anhänger, wobei das Frachttransportfahrzeug oder der Anhänger einen Rahmen aufweist und der Bodenbelag eine oder mehrere Platten aus Sperrholz aufweist, und wobei das Verfahren das Befestigen des Bodenbelags am Rahmen des Frachttransportfahrzeugs oder des Anhängers umfasst, **dadurch gekennzeichnet, dass** das Verfahren das Befestigen der einen oder mehreren Platten (302, 402a, 402b, 502) des Bodenbelags am Rahmen mit einem Haftmittel (303, 403, 503) und mit einem unlösbaren Befestigungselement (304, 404a, 404b, 504) umfasst, derart, dass das unlösbare Befestigungselement (304, 404a, 404b, 504) angeordnet ist, um durch die befestigte Platte (302, 402a, 402b, 502) und den Rahmen (301, 401, 501) zu reichen.

## Revendications

1. Plancher pour véhicule ou remorque destiné au transport de marchandises, dans lequel le véhicule ou remorque destiné au transport de marchandises comprend un cadre (101, 102, 103, 104) et le plancher (201, 202, 203, 204) comprend une ou deux panneaux de contre-plaqué, et dans lequel le plancher est fixé au cadre du véhicule ou remorque destiné au transport de marchandises, **caractérisé en ce que** le ou plusieurs panneaux (302, 402a, 402b, 502) du plancher sont fixés au cadre (301, 401, 501) par un adhésif (303, 403, 503) et par une attache fixe (304, 404a, 404b, 504), dans lequel l'attache fixe (304, 404a, 404b, 504) est agencée pour traverser le panneau attaché (302, 402a, 402b, 502) et le cadre (301, 401, 501).

2. Plancher pour véhicule ou remorque destiné au transport de marchandises selon la revendication 1, dans lequel l'attache fixe (304, 404a, 404b, 504) comprend une attache mécanique.

3. Plancher pour véhicule ou remorque destiné au transport de marchandises selon l'une quelconque des revendications 1-2, dans lequel l'attache fixe (304, 404a, 404b, 504) est agencée pour être visible à la surface du panneau (302, 402a, 402b, 502), laquelle surface est opposée à la surface du panneau faisant face au cadre (301, 401, 501), et sur la surface du cadre (301, 401, 501), laquelle surface est opposée à la surface du cadre faisant face au panneau (302, 402a, 402b, 502).

4. Plancher pour véhicule ou remorque destiné au transport de marchandises selon l'une quelconque des revendications 1-3, dans lequel l'attache fixe (304, 404a, 404b, 504) comprend une pièce déformée, soudée ou rivetée.

5. Plancher pour véhicule ou remorque destiné au transport de marchandises selon l'une quelconque des revendications 1-4, dans lequel le ou plusieurs panneaux (302, 402a, 402b, 502) du plancher sont fixés au cadre (301, 401, 501) par un adhésif (303, 403, 503) et par au moins deux attaches fixes (304, 404a, 404b, 504).

6. Plancher pour véhicule ou remorque destiné au transport de marchandises selon l'une quelconque des revendications 1-5, dans lequel chaque panneau (302, 402a, 402b, 502) du plancher comprend au moins deux attaches fixes (304, 404a, 404b, 504).

7. Plancher pour véhicule ou remorque destiné au transport de marchandises selon l'une quelconque des revendications 1-6, dans lequel chaque panneau (302, 402a, 402b, 502) du plancher comprend une attache fixe (304, 404a, 404b, 504) sur au moins deux bords opposés du panneau (302, 402a, 402b, 502) et/ou sur au moins deux coins opposés du panneau (302, 402a, 402b, 502).

8. Plancher pour véhicule ou remorque destiné au transport de marchandises selon l'une quelconque des revendications 1-7, dans lequel l'adhésif (303, 403, 503) est placé à la surface du cadre et le ou plusieurs panneaux (302, 402a, 402b, 502) sont agencés sur l'adhésif (303, 403, 503).

9. Plancher pour véhicule ou remorque destiné au transport de marchandises selon l'une quelconque des revendications 1-8, dans lequel un joint adhésif entre le ou plusieurs panneaux et le cadre est constitué de l'adhésif (503) et d'entretoises élastiques (5003).

10. Plancher pour véhicule ou remorque destiné au transport de marchandises selon l'une quelconque des revendications 1-9, dans lequel l'adhésif (303, 403, 503) est placé entre le ou plusieurs panneaux (302, 402a, 402b, 502) et le cadre (301, 401, 501), et au moins en partie entre l'attache fixe (304, 404a, 404b, 504) et le cadre (301, 401, 501).

11. Plancher pour véhicule ou remorque destiné au transport de marchandises selon l'une quelconque des revendications 1-10, dans lequel l'adhésif (303, 403, 503) est placé pour bloquer l'attache fixe (304, 404a, 404b, 504) et/ou dans lequel l'adhésif (303, 403, 503) est placé pour sceller l'attache fixe (304, 404a, 404b, 504).

12. Plancher pour véhicule ou remorque destiné au transport de marchandises selon l'une quelconque des revendications 1-11, dans lequel l'adhésif (303, 403, 503) comprend un adhésif à base de polyuréthane.

13. Plancher pour véhicule ou remorque destiné au transport de marchandises selon l'une quelconque des revendications 1-12, dans lequel l'adhésif (303, 403, 503) est compris entre les bords du ou de plusieurs panneaux (302, 402a, 402b, 502) et une partie du cadre (301, 401, 501) faisant face aux bords du ou de plusieurs panneaux (302, 402a, 402b, 502).

14. Plancher pour véhicule ou remorque destiné au transport de marchandises selon l'une quelconque des revendications 1-13, dans lequel le cadre (301, 401, 501) comprend du métal, et/ou dans lequel le cadre (301, 401, 501) comprend de la peinture sur sa surface externe.

15. Plancher pour véhicule ou remorque destiné au transport de marchandises selon l'une quelconque des revendications 1-14, dans lequel le contre-plaqué comprend un revêtement de résine phénolique au moins sur une surface faisant face au cadre, ou dans lequel de préférence le contre-plaqué comprend un revêtement de résine phénolique sur ses deux surfaces.

16. Véhicule ou remorque destiné au transport de marchandises comprenant un cadre (301, 401, 501) et un plancher selon l'une quelconque des revendications 1-15.

17. Procédé pour équiper d'un plancher un véhicule ou remorque destiné au transport de marchandises, dans lequel le véhicule ou remorque destiné au transport de marchandises comprend un cadre et le plancher comprend un ou plusieurs panneaux de contre-plaqué, et dans lequel le procédé comprend la fixation du plancher au cadre du véhicule ou remorque destiné au transport de marchandises, **caractérisé en ce que** le procédé comprend la fixation du ou des plusieurs panneaux (302, 402a, 402b, 502) du plancher au cadre par un adhésif (303, 403, 503) et par une attache fixe (304, 404a, 404b, 504) de telle façon que l'attache fixe (304, 404a, 404b, 504) est disposée pour traverser le panneau attaché (302, 402a, 402b, 502) et le cadre (301, 401,501).
